Europäisches Patentamt

European Patent Office

Office européen des brevets

(19)

(11) Numéro de publication : **0 410 370 B1**

(12)

# FASCICULE DE BREVET EUROPEEN

(45) Date de publication du fascicule du brevet :
**15.04.92 Bulletin 92/16**

(51) Int. Cl.[5] : **G01N 3/22,** G01N 3/30, G01H 1/10

(21) Numéro de dépôt : **90114148.1**

(22) Date de dépôt : **24.07.90**

(54) **Dispositif de test dynamique d'un échantillon en torsion.**

(30) Priorité : **28.07.89 LU 87562**

(43) Date de publication de la demande :
**30.01.91 Bulletin 91/05**

(45) Mention de la délivrance du brevet :
**15.04.92 Bulletin 92/16**

(84) Etats contractants désignés :
**BE DE DK ES FR GB GR IT LU NL**

(56) Documents cités :
**JOURNAL OF THE MECHANICALS & PHYSICS OF SOLIDS, vol.18, 1970, pp 43-63, Pergamon Press, Oxford, GB; J.D. CAMPBELL et al.: "The behaviour of materials subjected to dynamic incremental shear loading" TRANSACTIONS OF THE ASME, JOURNAL OF APPLIED MECHANICS, vol. 39, no. 3, septembre 1972, pages 651-656, ASME, New York, US; J. DUFFY et al.: "The deformation of lead in torsion at high strain rates"**

(73) Titulaire : **EUROPEAN ECONOMIC COMMUNITY E.E.C.
Bâtiment Jean Monnet Plateau du Kirchberg
L-2920 Luxembourg (LU)**

(72) Inventeur : **Montagnani, Mario
Via G. Rossi 5
I-Bologna (IT)**
Inventeur : **Albertini, Carlo
Via dei Pini 17
I-Ispra (IT)**
Inventeur : **Micunovic, Milan
Ul. M. Ivese 1-JJ/2
YU-34000 Kragujevac (YU)**

(74) Mandataire : **Weinmiller, Jürgen
Lennéstrasse 9 Postfach 24
W-8133 Feldafing (DE)**

## Description

L'invention se réfère à un dispositif de test dynamique en torsion d'un échantillon, comportant en alignement axial

– un générateur susceptible de créer au moins un effort de torsion,

– une barre transmettant cet effort du générateur vers l'échantillon accouplé à l'extrémité de la barre,

– un dispositif de blocage susceptible de bloquer et de libérer brusquement ladite barre, ce dispositif étant appliqué à la barre en un point situé entre l'échantillon et le générateur.

Un dispositif de test en traction est connu à partir de la publication "Institute of Physics Conference Series N° 21, 1974", pages 22 à 30 C. Albertini and M. Montagnani: "Testing techniques based on the split Hopkinson bar.". On y voit en effet un générateur d'effort de traction constitué par une vis différentielle et accouplé à une extrémité d'une première barre, dont l'autre extrémité est reliée à une seconde barre à travers l'échantillon. Un dispositif de blocage, qui permet de bloquer et de libérer brusquement cette barre sur commande est situé à un point intermédiaire entre l'échantillon et ledit générateur. Des moyens de mesure de contrainte sont disposés entre ce dispositif de blocage et l'échantillon d'une part, et entre l'échantillon et l'extrémité libre de la seconde barre d'autre part.

En opération, on charge la première barre par le générateur en traction et puis on libère brusquement le dispositif de blocage, ce qui fait propager une onde de traction le long de la première barre depuis ce dispositif vers l'échantillon. Les jauges de contrainte mesurent l'effort auquel l'échantillon a été soumis jusqu'à la rupture.

Un tel dispositif ne se prête pas à l'étude des effets que la torsion exerce sur un échantillon. En effet, lorsqu'un générateur de torsion au lieu d'un générateur de traction charge la première barre jusqu'au dispositif de blocage en torsion et lorsqu'on libère ensuite le dispositif de blocage, on observe qu'une grande partie de l'énergie de torsion stockée dans la première barre se transforme en traction, cette force se propageant à une vitesse nettement plus grande que l'onde transversale ou de torsion. Bien avant l'arrivée de l'onde transversale, l'échantillon est alors soumis à une contrainte de traction qui précède l'onde transversale, d'autant plus que l'échantillon est plus éloigné du dispositif de blocage. Pour réduire ce phénomène, il faudrait donc rapprocher l'échantillon du dispositif de blocage, mais ce rapprochement est limité, car il faut en général prévoir un moyen de mesure de contrainte entre l'échantillon et le dispositif de blocage.

L'invention a donc pour but de concevoir un dispositif de test dynamique en torsion permettant d'élargir les variantes de test et en particulier de soumettre l'échantillon à un effort de torsion qui précède tout effort de traction.

Ce but est atteint par le dispositif tel que défini ci-dessus, qui est caractérisé par le fait qu'on prévoit entre ladite barre et l'échantillon un organe de transmission privilégiée d'ondes transversales, cet organe comprenant

– un noyau cylindrique fait d'un métal d'un module d'élasticité modéré, et muni de brides aux deux extrémités,

– une pluralité de fibres qui entourent le noyau hélicoïdalement et parallèlement les unes aux autres, qui sont fixées aux deux brides de façon tendue et qui présentent un module d'élasticité notablement plus élevé que le noyau.

En ce qui concerne une mise en oeuvre préférée du dispositif, et en particulier de son organe de transmission privilégiée des ondes transversales, référence est faite aux sous-revendications.

L'invention sera décrite ci-après plus en détail à l'aide d'un exemple de mise en oeuvre préférée et des dessins annexés.

La figure 1 montre schématiquement un dispositif de test selon l'invention.

La figure 2 représente en vue partiellement coupée un organe utilisé dans le dispositif selon la figure 1.

La figure 3 représente un échantillon utilisable dans le dispositif selon la figure 1.

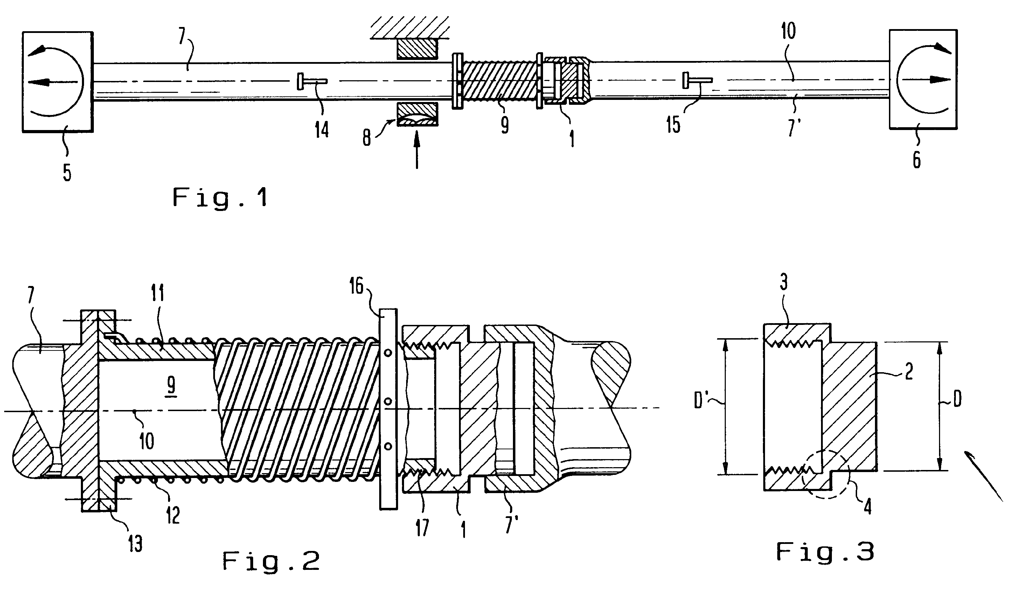

Le dispositif représenté sur la figure 1 sert à soumettre un échantillon 1 à des tests statiques et dynamiques de traction et de torsion, la séquence des différentes contraintes pouvant être arrêtée au choix par l'opérateur.

L'échantillon servant au test est constitué, comme on le voit plus clairement sur la figure 3, d'un cylindre 2 d'un diamètre extérieur D qui est axialement suivi d'un tube 3 dont le diamètre intérieur D' est plus grand que D. Le tube 3 et le cylindre 2 viennent d'une seule pièce, et la zone de transition 4 entre le cylindre et le tube constitue la vraie zone de test. Des efforts de traction et de torsion pour le test dynamique sont engendrés par un générateur 5, qui est relié à l'échantillon 1 par une barre de stockage d'énergie 7 et un organe 9 de transmission privilégiée d'effort de torsion. A proximité de son extrémité droite sur la figure 1, la barre 7 traverse un dispositif de blocage 8 qui est conçu pour bloquer la barre et pour la libérer sur commande par un opérateur. Ce dispositif peut être du type décrit et représenté dans le document "Institute of Physics Conference Series" cité ci-dessus.

Le cylindre 2 de l'échantillon est fixé à une autre barre 7' qui aboutit enfin à un autre générateur 6 d'effort de traction et/ou de torsion servant à imprimer des efforts statiques à l'échantillon. Tous les éléments mentionnés sont alignés selon un axe commun 10.

Enfin, on a indiqué schématiquement sur la figure 1 deux jauges de contrainte biaxiales 14 et 15 qui sont appliquées aux deux barres 7 et 7′ à distance de l'échantillon 1.

Les différents éléments du dispositif sont alignés selon un axe commun 10 et sont réunis par vissage, soudure ou boulonnage.

Un élément essentiel du dispositif selon l'invention est l'organe 9 de transmission privilégiée des ondes transversales qui est représenté en détail sur la figure 2. Il est composé d'un noyau 11 cylindrique et tubulaire, fait d'un métal de module d'élasticité modéré et muni de deux brides 13 et 16 aux deux extrémités et d'une pluralité de fibres 12, qui entourent ce noyau hélicoïdalement et parallèlement les unes aux autres et qui sont fixées aux deux brides 13 et 16. Ces fibres sont en un métal d'un module d'élasticité notablement plus élevé que le noyau. Si, par exemple, le noyau est fait d'aluminium, les fibres sont à base de molybdène, osmium ou rhénium.

L'une des brides, 13, fait partie intégrale du noyau 11, alors que l'autre bride 16 constitue un écrou qui est vissé sur un filetage 17 du noyau 11. Cette bride 16 est fixée soit par un contre-écrou (non représenté) soit par un soudage. Le filetage 17 peut servir aussi à l'accouplement à l'échantillon 1 lorsque ce dernier comporte un filetage intérieur correspondant.

La vitesse de propagation d'une onde mécanique est proportionnelle à la racine du module d'élasticité du matériau. Grâce au module d'élasticité des fibres 12 très élevé par rapport à celui du noyau 11, une onde transversale provenant d'une précontrainte de torsion de la barre 7 est libérée par le dispositif de blocage 8 et elle est aussitôt transmise par les fibres 12 à la bride 16 et ainsi à l'échantillon 1. Même si la libération du dispositif de blocage 8 a engendré, en sus, une onde longitudinale vers l'échantillon 1, l'onde transversale arrive à "doubler" l'onde longitudinale dans l'organe 9. En choisissant convenablement la longueur de l'organe 9 et le pas d'hélice des fibres 12, on peut soumettre l'échantillon à une historique quelconque de contraintes, et en particulier on peut soumettre la zone 4 de l'échantillon, dans un test dynamique, soit à des contraintes simultanées de traction et de torsion, soit à des contraintes consécutives de traction-torsion, soit à une contrainte consécutive torsion-traction. L'invention offre donc au chercheur toute liberté d'établir une historique d'efforts.

L'invention n'est pas limitée à l'exemple de réalisation décrit ci-dessus. On peut, sans sortir du cadre de l'invention, choisir un organe 9 à noyau plein ou tubulaire, et on peut prévoir plusieurs dispositifs de blocage tels que 8 le long de la barre 7, permettant ainsi d'imprimer des précontraintes différentes d'une section à l'autre et de décharger les différentes précontraintes successivement sur l'échantillon.

En outre, on peut choisir pour le noyau d'une part et pour les fibres d'autre part des matériaux dont les modules d'élasticité sont encore plus éloignés les uns des autres que l'acier et l'aluminium le sont du molybdène, de l'osmium et du rhénium.

## Revendications

1. Dispositif de test dynamique en torsion d'un échantillon, comportant en alignement axial
   – un générateur (5) susceptible de créer au moins un effort de torsion,
   – une barre (7) transmettant cet effort du générateur vers l'échantillon (1) accouplé à l'extrémité de la barre,
   – un dispositif de blocage (8) susceptible de bloquer et de libérer brusquement ladite barre (7), ce dispositif (8) étant appliqué à la barre (7) en un point situé entre l'échantillon (1) et le générateur (5), caractérisé en ce qu'on prévoit entre ladite barre (7) et l'échantillon (1) un organe (9) de transmission privilégiée d'ondes transversales, cet organe (9) comprenant
   – un noyau cylindrique (11) fait d'un métal d'un module d'élasticité modéré, et muni de brides (13, 16) aux deux extrémités,
   – une pluralité de fibres (12) qui entourent le noyau (11) hélicoïdalement et parallèlement les unes aux autres, qui sont fixées aux deux brides (13, 16) de façon tendue et qui présentent un module d'élasticité plus élevé que le noyau (11).

2. Dispositif selon la revendication 1, caractérisé en ce que l'une des brides (13) fait partie intégrale du noyau (11), alors que l'autre bride (16) constitue un écrou qui est vissé sur un filetage (17) du noyau.

3. Dispositif selon l'une quelconque des revendications précédentes, caractérisé en ce que les fibres (12) sont fixées au noyau cylindrique (11) sur au moins une partie de leur longueur entre les brides (13, 16), par exemple par soudure ou collage.

4. Dispositif selon l'une quelconque des revendications précédentes, caractérisé en ce que le noyau (11) est en un métal à base d'acier ou d'aluminium.

5. Dispositif selon l'une quelconque des revendications précédentes, caractérisé en ce que les fibres (12) sont en un métal à base de molybdène, osmium ou rhénium.

6. Dispositif selon l'une quelconque des revendications précédentes, caractérisé en ce que ledit noyau (11) est tubulaire.

## Patentansprüche

1. Vorrichtung zur dynamischen Torsionsprüfung einer Probe, die axial fluchtend aufweist
   – einen Generator (5), der mindestens eine Torsionskraft erzeugen kann,

– einen Stab (7), der diese Kraft vom Generator zur an das Ende des Stabs angekoppelten Probe (1) überträgt,

– eine Blockiervorrichtung (8), die diesen Stab (8) blockieren und plötzlich freigeben kann, wobei diese Vorrichtung (8) an einem Punkt an den Stab angelegt ist, der zwischen der Probe (1) und dem Generator (5) liegt, dadurch gekennzeichnet, daß zwischen dem Stab (7) und der Probe (1) ein Organ (9) zur bevorzugten Übertragung von Transversalwellen vorgesehen ist, wobei dieses Organ (9) aufweist:

– einen zylindrischen Kern (11) aus einem Metall mit mäßigem Elastizitätsmodul und mit Flanschen (13, 16) an seinen beiden Enden,

– eine Vielzahl von Fasern (12), die den Kern (11) spiralförmig und parallel zueinander umgeben, die an den beiden Flanschen (13, 16) unter Spannung befestigt sind und die einen höheren Elastizitätsmodul als der Kern (11) aufweisen.

2. Vorrichtung nach Anspruch 1, dadurch gekennzeichnet, daß einer der Flansche (13) mit dem Kern (11) ein Bauteil bildet, während der andere Flansch (16) eine Mutter bildet, die auf ein Gewinde (17) des Kerns aufgeschraubt ist.

3. Vorrichtung nach einem beliebigen der vorhergehenden Ansprüche, dadurch gekennzeichnet, daß die Fasern (12) am zylindrischen Kern (11) über mindestens einen Teil ihrer Länge zwischen den Flanschen (13, 16) durch Schweißen oder Kleben befestigt sind.

4. Vorrichtung nach einem beliebigen der vorhergehenden Ansprüche, dadurch gekennzeichnet, daß der Kern (11) aus einem Metall auf der Basis von Stahl oder Aluminium besteht.

5. Vorrichtung nach einem beliebigen der vorhergehenden Ansprüche, dadurch gekennzeichnet, daß die Fasern (12) aus einem Metall auf der Basis von Molybdän, Osmium oder Rhenium bestehen.

6. Vorrichtung nach einem beliebigen der vorhergehenden Ansprüche, dadurch gekennzeichnet, daß der Kern (11) rohrförmig ist.

## Claims

1. A dynamic torsion testing device for a sample, comprising in axial alignment

– a generator (5) apt to create at least a torsion force,

– a bar (7) transmitting this force from the generator to the sample (1) which is coupled to the end of the bar,

– a blocking device (8) apt to block and to abruptly release said bar (7), this device (8) being applied to the bar (7) in a point situated between the sample (1) and the generator (5), characterized in that between said bar (7) and the sample (1) an element (9) for privileged transmission of transversal waves is provided, this element (9) comprising

– a cylindrical core (11) made of a metal with a moderate elasticity module, and provided with flanges (13, 16) on both ends,

– a plurality of fibers (12) which surround the core (11) helically and parallelly to each other, which are secured un der tension to the two flanges (13, 16) and which present an elasticity module which is higher than that of the core.

2. A device according to claim 1, characterized in that one of the flanges (13) is an integral part of the core (11), whereas the other flange (16) constitutes a nut which is screwed onto a thread (17) of the core.

3. A device according to any one of the preceding claims, characterized in that the fibers (12) are secured to the cylindrical core (11) over at least part of their length between the flanges (13, 16) by welding or gluing.

4. A device according to any one of the preceding claims, characterized in that the core (11) is made of a metal on the basis of steel or aluminium.

5. A device according to any one of the preceding claims, characterized in that the fibers (12) are made of a metal on the basis of molybdenum, osmium or rhenium.

6. A device according to any one of the preceding claims, characterized in that said core (11) is of tubular shape.

Fig.1

Fig.2

Fig.3